# EUROPÄISCHE PATENTSCHRIFT

(11) **EP 2 846 376 B1**
(45) Veröffentlichungstag und Bekanntmachung des Hinweises auf die Patenterteilung: **12.10.2016**
(21) Anmeldenummer: 14182746.9
(22) Anmeldetag: 29.08.2014
(51) Int. Cl.: H01M 2/20

(54) **Flexibler Zellverbinder und Verfahren zum Herstellen eines flexiblen Zellverbinders zum elektrischen Verbinden von Zellen eines Energiespeichers**
Flexible cell connector and method of producing a flexible cell connector for electrically connecting cells of an energy storage device
Connecteur de cellules souple et procédé d'un connecteur de cellules souple destiné à la connexion électrique de cellules d'un système de stockage d'énergie

(30) Priorität: 06.09.2013 DE 102013217815
(43) Veröffentlichungstag der Anmeldung: 11.03.2015
(73) Patentinhaber: ROBERT BOSCH GMBH, 70442 Stuttgart (DE)
(72) Erfinder: Dudziak, Sonja, 74321 Bietigheim-Bissingen (DE); Kobler, Christof, 70469 Stuttgart (DE); Gerschwitz, Thomas, 71735 Eberdingen (DE)

(56) Entgegenhaltungen:
- EP-A2- 2 515 381
- WO-A1-2011/021452
- WO-A2-2012/163642
- CN-C- 1 233 052
- DE-A1-102012 100 862
- GB-A- 2 083 278
- KR-A- 20120 004 189
- US-A1- 2006 032 667
- US-A1- 2006 270 286
- US-A1- 2012 100 761
- US-A1- 2013 029 540
- US-A1- 2013 089 996

## Beschreibung

Die Erfindung betrifft einen flexiblen Zellverbinder und ein Verfahren zum Herstellen eines flexiblen Zellverbinders zum elektrischen Verbinden von Zellen eines Energiespeichers.

### Stand der Technik

Zum elektrischen Verschalten von Batteriezellen zu Modulen werden Zellverbinder benötigt. Das Verschalten der einzelnen Module mit Modulverbindern geschieht analog wie bei den Zellverbindern. Aktuell werden massive Verbinder aus Aluminium oder Kupfer verwendet. Zur Reduzierung einer mechanischen Belastung der elektrischen Anschlussterminals der Zellen werden teilweise Wellen in die Verbinder eingebracht. Diese verhindern bei einer möglichen Relativbewegung der Zellen die Entstehung größerer Kräfte.

Die DE 10 2009 058 723 A1 beschreibt einen flexiblen Zellverbinder zum elektrischen Verbinden von Zellen eines Energiespeichers, bestehend aus einem Blech, wobei das Blech über Längsseitenkanten und Stirnseitenkanten und benachbart zu den Stirnseitenkanten über Kontaktierungsabschnitte verfügt zum Kontaktieren mit den Anschlüssen einer Energiespeicherzelle, wobei zwischen einem ersten Kontaktierungsabschnitt und einem zweiten Kontaktierungsabschnitt ein flexibler Biegeabschnitt angeordnet ist, der mehrere im Wesentlichen parallel verlaufende Schlitze aufweist. Der Biegeabschnitt ist im Wesentlichen U-förmig ausgebildet. Ein geschlitzter Lamellenabschnitt im Bereich des Biegeabschnitts gewährleistet eine Beweglichkeit sowohl in Hoch-, Längs-, als auch in Querrichtung des Zellverbinders.

Die Druckschrift US 2013/089996 A1 offenbart einen aus mehreren Lagen ausgebildeten flexiblen Zellverbinder.

Weiterhin offenbart die Druckschrift WO2012/163642 A2 einen flexiblen Zellverbinder, welcher eine Mehrzahl an Lagen aufweist.

Die Druckschriften DE 10 2012 100862 A1, WO 2011/021452 und CN 1 233 052 C offenbaren auch Zellverbinder zur elektrisch leitenden Verbindung von Zellen eines Energiespeichers.

### Offenbarung der Erfindung

Die vorliegende Erfindung schafft einen flexiblen Zellverbinder zum elektrischen Verbinden von Zellen eines Energiespeichers. Der Zellverbinder ist aus einer einzelnen metallischen Folie ausgebildet, welche eine Mehrzahl von Lagen aufweist.

Die vorliegende Erfindung schafft des Weiteren ein Verfahren zum Herstellen eines flexiblen Zellverbinders zum elektrischen Verbinden von Zellen eines Energiespeichers. Das Verfahren weist ein Zuschneiden eines Streifens einer metallischen Folie mit einer vorbestimmten Länge und Breite auf. Ferner weist das Verfahren ein Anordnen der metallischen Folie in einer Mehrzahl von Lagen zum Ausbilden des Zellverbinders auf.

### Vorteile der Erfindung

Ein Vorteil der vorliegenden Erfindung ist es, eine verbesserte Flexibilität des Zellverbinders in Hoch-, Quer- und Längsrichtung zu erzielen.

Durch den mehrlagigen Aufbau kann der Zellverbinder sehr gut Bewegungen in alle drei Raumrichtungen kompensieren, ohne dass sich größere Kräfte aufbauen. Aufgrunddessen, dass der Zellverbinder aus einer einzelnen metallischen Folie ausgebildet ist, welche eine Mehrzahl von Lagen aufweist, sind die einzelnen Lagen miteinander verbunden. Dadurch ist wie bei einem massiv ausgebildeten Zellverbinder ein einfaches Verschweißen der jeweiligen Anschlussteile mit dem jeweiligen Zellterminal möglich, wobei der erfindungsgemäße Zellverbinder eine verbesserte Flexibilität in Hoch-, Quer- und Längsrichtung des aufweist.

Durch das Zuschneiden eines Streifens der metallischen Folie mit einer vorbestimmten Länge und Breite auf sowie dem Anordnen der metallischen Folie in einer Mehrzahl von Lagen zum Ausbilden des Zellverbinders kann der Zellverbinder sehr einfach und kostengünstig hergestellt werden.

Vorteilhafte Ausführungsformen und Weiterbildungen ergeben sich aus den Unteransprüchen sowie aus der Beschreibung unter Bezugnahme auf die Figuren.

Erfindungsgemäß ist vorgesehen, dass die einzelne metallische Folie zum Ausbilden der Mehrzahl von Lagen in Längsrichtung oder in Querrichtung des

Zellverbinders gewickelt ist. Durch diesen Aufbau wird eine sehr hohe Flexibilität in Hoch-, Quer- und Längsrichtung erzielt. Der Verbinder besteht nur aus einem Teil, das nicht auseinanderfallen kann. Der Herstellprozess ist zudem sehr einfach und kostengünstig. Durch Faltung wird ebenfalls wie bei Wicklung der metallischen Folie eine sehr hohe Flexibilität in Hoch-, Quer- und Längsrichtung erzielt. Bei Faltung der metallischen Folie in Querrichtung des Zellverbinders kann im Vergleich zur Wicklung in Querrichtung eine nochmals gesteigerte Flexibilität in Hochrichtung des Zellverbinders erzielt werden.

Vorzugsweise ist ferner vorgesehen, dass der flexible Zellverbinder einen ersten, zum Anschluss an ein Zellterminal einer ersten Speicherzelle gebildeten Anschlussteil, einen zweiten, zum Anschluss an ein Zellterminal einer zweiten Speicherzelle gebildeten Anschlussteil, und einen, zwischen den Anschlussteilen angeordneten und die Anschlussteile elektrisch miteinander kontaktierenden Verbindungsteil aufweist, wobei der Zellverbinder im Bereich des Verbindungsteils zumindest eine wellenförmige Biegung um eine Querachse des Zellverbinders aufweist. Durch Vorsehen der wellenförmigen Biegung kann eine verbesserte Flexibilität in Hoch- und Längsrichtung des Zellverbinders erreicht werden.

Gemäß einer weiteren bevorzugten Ausgestaltung ist vorgesehen, dass der Zellverbinder geeignet ist, das Zellterminal der ersten Speicherzelle eines ersten Moduls des Energiespeichers und das Zellterminal der zweiten Speicherzelle eines zweiten Moduls des Energiespeichers zu verbinden, wobei der Zellverbinder im Bereich des Verbindungsteils eine Isolationsfolie aufweist, welche den Zellverbinder von umgebenden Bauteilen elektrisch isoliert, wobei die Isolationsfolie um den Zellverbinder in Querrichtung des Zellverbinders gewickelt ist. Somit wird eine kostengünstige Isolation des Verbinders, die die Flexibilität nicht beeinträchtigt, geschaffen.

Vorzugsweise ist ferner vorgesehen, dass die einzelne metallische Folie in Querrichtung des Zellverbinders gewickelt ist, wobei ein Endabschnitt der Isolationsfolie an einem Endabschnitt der metallischen Folie des Zellverbinders fixiert ist. Durch Fixierung der Isolationsfolie an der metallischen Folie kann bei quergewickelten Zellverbindern die Isolationsfolie vor dem Wickeln an das Ende der metallischen Folie fixiert werden und somit anschließend in einem Prozess aufgewickelt werden. Ferner kann die Isolationsfolie vor Einprägen der wellenförmigen Biegung in das Verbindungsteil des Zellverbinders um den Zellverbinder gewickelt werden. Dies ermöglicht eine einfachere Montage sowie eine bessere Anpassung der Isolationsfolie an die Kontur des Zellverbinders.

Gemäß einem weiteren bevorzugten Ausführungsbeispiel ist vorgesehen, dass die Fixierung des Endabschnitts der Isolationsfolie an dem Endabschnitt der metallischen Folie durch eine Klebe- oder Schweißverbindung ausgebildet ist. Somit kann eine einfache und sichere Fixierung der Isolationsfolie an der metallischen Folie des Zellverbinders ermöglicht werden.

Gemäß einer weiteren bevorzugten Ausgestaltung ist vorgesehen, dass der Zellverbinder im Bereich des Verbindungsteils eine erste wellenförmige Biegung um die Querachse des Zellverbinders und eine zweite wellenförmige Biegung um die Querachse des Zellverbinders aufweist, wobei die erste und zweite wellenförmige Biegung an in Hochrichtung des Zellverbinders gegenüberliegenden Abschnitten des Zellverbinders angeordnet sind. Diese Ausgestaltung des Zellverbinders ermöglicht eine kompakte Bauform des Zellverbinders, speziell in Hochrichtung des Zellverbinders oberhalb einer Längsachse des Zellverbinders und bietet somit eine optimale Anpassung an bauliche Anforderungen bei geringem Bauraum in Hochrichtung oberhalb der Längsachse des Zellverbinders.

Gemäß einer weiteren bevorzugten Ausgestaltung ist vorgesehen, dass die metallische Folie zum Ausbilden der Mehrzahl von Lagen in Längsrichtung oder in Querrichtung des Verbinders gewickelt oder gefaltet wird. Durch Wickeln der metallischen Folie wird eine sehr hohe Flexibilität in Hoch-, Quer- und Längsrichtung erzielt. Der Verbinder besteht nur aus einem Teil, das nicht auseinanderfallen kann. Der Herstellprozess ist zudem sehr einfach und kostengünstig. Durch Falten der metallischen Folie wird ebenfalls wie bei Wicklung der metallischen Folie eine sehr hohe Flexibilität in Hoch-, Quer- und Längsrichtung erzielt. Durch die Faltung der metallischen Folie in Querrichtung des Zellverbinders kann im Vergleich zur Wicklung in Querrichtung eine nochmals gesteigerte Flexibilität in Hochrichtung des Zellverbinders erzielt werden.

Gemäß einem weiteren bevorzugten Ausführungsbeispiel ist vorgesehen, dass der Zellverbinder das Zellterminal der ersten Speicherzelle eines ersten Moduls des Energiespeichers und das Zellterminal der zweiten Speicherzelle eines zweiten Moduls des Energiespeichers verbindet, wobei der Zellverbinder im Bereich des Verbindungsteils eine Isolationsfolie aufweist, welche den Zellverbinder von umgebenden Bauteilen elektrisch isoliert, wobei die Isolationsfolie um den Zellverbinder in Querrichtung des Zellverbinders gewickelt wird. Somit wird eine kostengünstige Isolation des Verbinders, die die Flexibilität nicht beeinträchtigt, geschaffen.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine schematische Darstellung eines flexiblen Zellverbinders gemäß einer ersten Ausführungsform der Erfindung;
- Fig. 2: eine vergrößerte Teilansicht der in Fig. 1 gezeigten schematischen Darstellung des flexiblen Zellverbinders gemäß der ersten Ausführungsform der Erfindung;
- Fig. 3: eine schematische Darstellung einer Wicklung des flexiblen Zellverbinders gemäß der ersten Ausführungsform der Erfindung;
- Fig. 4: eine schematische Darstellung des flexiblen Zellverbinders gemäß einer zweiten Ausführungsform der Erfindung;
- Fig. 6: eine schematische Darstellung des flexiblen Zellverbinders gemäß einer vierten Ausführungsform der Erfindung;
- Fig. 7: eine schematische Darstellung des flexiblen Zellverbinders gemäß einer fünften Ausführungsform der Erfindung; und

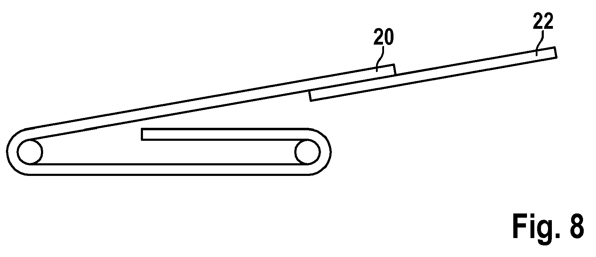

- Fig. 8: eine schematische Darstellung einer Wicklung des flexiblen Zellverbinders gemäß der fünften Ausführungsform der Erfindung.

In den Figuren der Zeichnung bezeichnen gleiche Bezugszeichen gleiche oder funktionsgleiche Elemente, Bauteile oder Komponenten, soweit nichts Gegenteiliges angegeben ist.

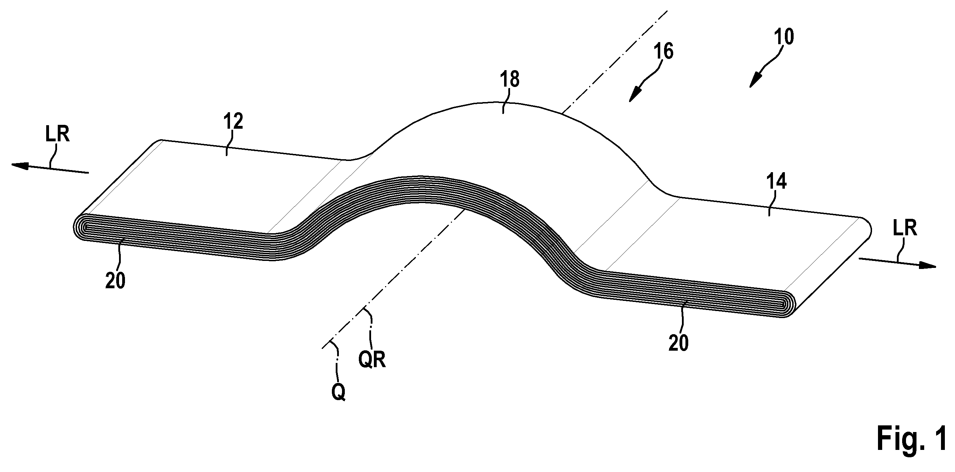

Fig. 1 zeigt eine schematische Darstellung eines flexiblen Zellverbinders gemäß einer ersten Ausführungsform der Erfindung.

Der flexible Zellverbinder 10 zum elektrischen Verbinden von Zellen eines Energiespeichers weist einen ersten, zum Anschluss an ein (in Fig. 1 nicht gezeigtes) Zellterminal einer ersten Speicherzelle gebildeten Anschlussteil 12 sowie einen zweiten, zum Anschluss an ein (in Fig. 1 nicht gezeigtes) Zellterminal einer zweiten Speicherzelle gebildeten Anschlussteil 14 auf. Darüber hinaus weist der Zellverbinder 10 einen zwischen den Anschlussteilen 12, 14 angeordneten und die Anschlussteile elektrisch miteinander kontaktierenden Verbindungsteil 16 auf. Der Zellverbinder 10 weist des Weiteren im Bereich des Verbindungsteils 16 eine wellenförmige Biegung 18 um eine Querachse Q des Zellverbinders 10 auf. Der Zellverbinder 10 ist aus einer einzelnen metallischen Folie 20 ausgebildet, welche eine Mehrzahl von Lagen aufweist. Die wellenförmige Biegung 18 im Bereich des Verbindungsteils 16 ist derart ausgebildet, dass der erste und zweite Anschlussteil 12, 14 des Zellverbinders 10 in der gleichen Ebene angeordnet sind. Die einzelne metallische Folie 20 zum Ausbilden der Mehrzahl von Lagen ist gemäß der vorliegenden Ausführungsform in Längsrichtung LR des Zellverbinders 10 gewickelt. Alternativ kann die metallische Folie 20 zum Ausbilden der Mehrzahl von Lagen ebenfalls in Querrichtung QR des Zellverbinders 10 gewickelt sein. Alternativ kann der flexible Zellverbinder 10 ebenfalls ohne die wellenförmige Biegung 18 um die Querachse Q des Zellverbinders 10 vorgesehen werden.

Der Zellverbinder 10 ist in Fig. 1 in gewickeltem Zustand gezeigt. Nach Abschluss der Wicklung wird die gewickelte metallische Folie 20 des Zellverbinders 10 flach gepresst, sodass eine kompakte Bauform des Zellverbinders 10 erreicht wird.

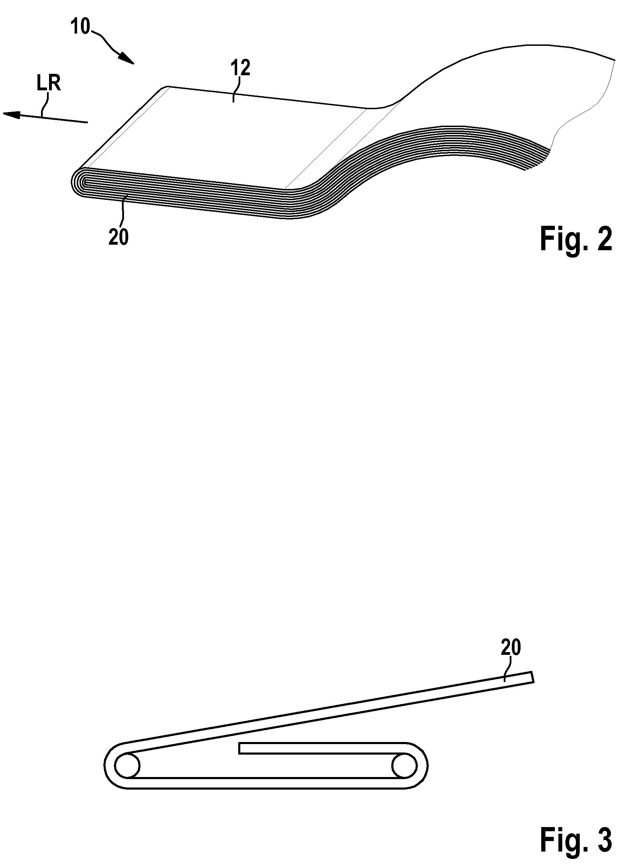

Fig. 2 zeigt eine vergrößerte Teilansicht der in Fig. 1 gezeigten schematischen Darstellung des flexiblen Zellverbinders gemäß der ersten Ausführungsform der Erfindung.

Die metallische Folie 20 ist in Fig. 2 in Längsrichtung LR des Zellverbinders 10 gewickelt. Eine Lage der metallischen Folie 20 weist vorzugsweise eine Dicke von 200 um auf. Alternativ kann die metallische Folie 20 ebenfalls eine andere geeignete Dicke aufweisen. Der in Fig. 2 dargestellte Zellverbinder 10 weist vorzugsweise fünf Wicklungen, d.h. zehn Lagen der metallischen Folie 20 und damit eine Dicke von 2 mm auf. Je nach baulichen Anforderungen kann die Anzahl von Wicklungen der metallischen Folie 20 jedoch variiert werden.

Fig. 3 zeigt eine schematische Darstellung einer Wicklung des flexiblen Zellverbinders gemäß der ersten Ausführungsform der Erfindung.

Die metallische Folie 20 wird in der Darstellung gemäß Fig. 3 um ein Werkzeug gewickelt, welches zwei in einem vorbestimmten Abstand zueinander angeordnete stiftförmige Elemente aufweist. Nach Abschluss des Wickelprozesses wird die gewickelte metallische Folie 20 von dem Werkzeug abgezogen.

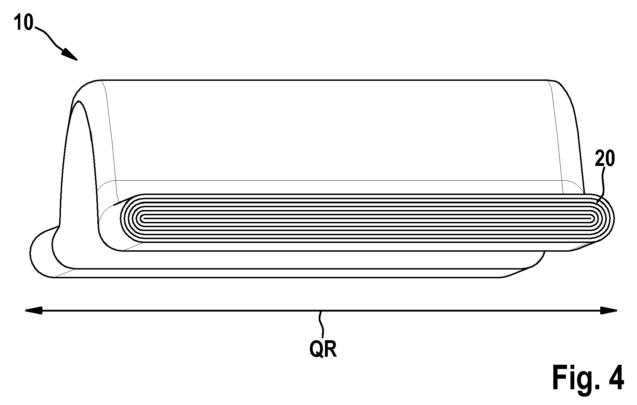

Fig. 4 zeigt eine schematische Darstellung des flexiblen Zellverbinders gemäß einer zweiten Ausführungsform der Erfindung.

In der Darstellung von Fig. 4 ist die metallische Folie 20 in Querrichtung QR des Zellverbinders 10 gewickelt. Eine Lage der metallischen Folie 20 weist vorzugsweise eine Dicke von 200 µm auf. Alternativ kann die metallische Folie 20 ebenfalls eine andere geeignete Dicke aufweisen. Der in Fig. 4 dargestellte Zellverbinder 10 weist vorzugsweise fünf Wicklungen, d.h. zehn Lagen der metallischen Folie 20 und damit eine Dicke von 2 mm auf. Je nach baulichen Anforderungen kann die Anzahl von Wicklungen der metallischen Folie 20 jedoch variiert werden.

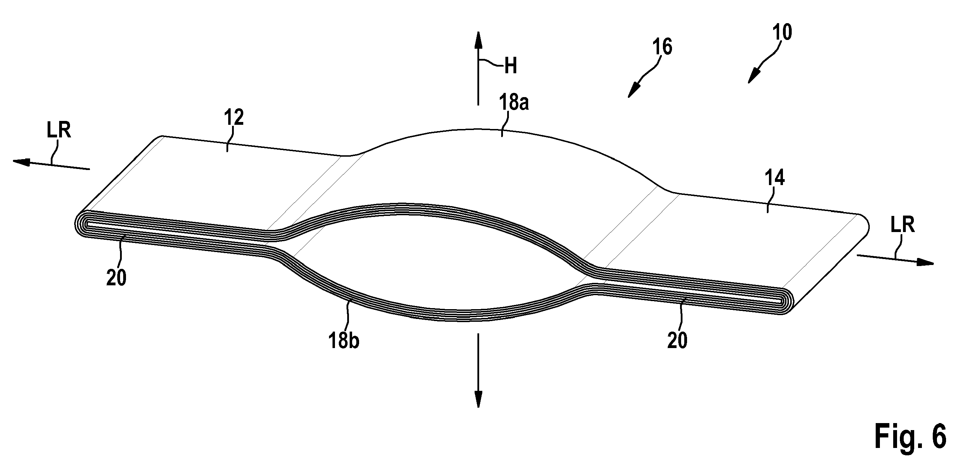

Fig. 6 zeigt eine schematische Darstellung des flexiblen Zellverbinders gemäß einer vierten Ausführungsform der Erfindung.

Der Zellverbinder 10 ist in der Darstellung gemäß Fig. 6 in Längsrichtung LR des Zellverbinders 10 gewickelt. Die metallische Folie 20 des Zellverbinders 10 ist insbesondere derart gewickelt, dass im Bereich einer Längsachse des Zellverbinders 10 im Bereich des ersten Anschlussteils 12 und des zweiten Anschlussteils 14 jeweils ein in Längsrichtung ausgebildeter Spalt vorgesehen ist, welcher einen in Hochrichtung des Zellverbinders 10 angeordneten oberen Wicklungsabschnitt von einem unteren Wicklungsabschnitt des Zellverbinders 10 trennt. Alternativ kann die Wicklung der metallischen Folie 20 des Zellverbinders 10 auch derart angeordnet sein, dass kein Spalt in Längsrichtung des Zellverbinders 10 ausgebildet ist.

Der Zellverbinder 10 weist des Weiteren im Bereich des Verbindungsteils 16 eine erste wellenförmige Biegung 18a um die Querachse Q des Zellverbinders 10 und eine zweite wellenförmige Biegung 18b um die Querachse Q des Zellverbinders 10 auf, wobei die erste und zweite wellenförmige Biegung 18a, 18b an in Hochrichtung H des Zellverbinders gegenüberliegenden Abschnitten des Zellverbinders 10 angeordnet sind.

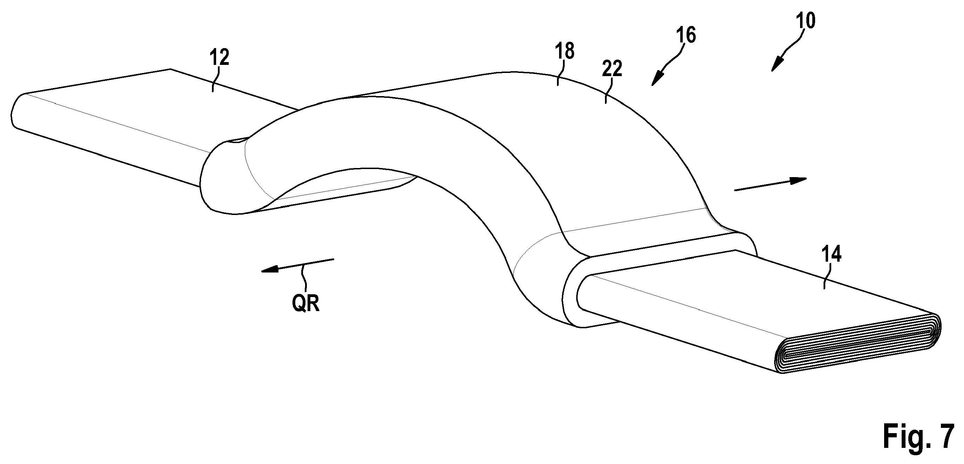

Fig. 7 zeigt eine schematische Darstellung des flexiblen Zellverbinders gemäß einer fünften Ausführungsform der Erfindung.

In der Darstellung gemäß Fig. 7 ist der Zellverbinder 10 im Bereich des Verbindungsteils 16 mit einer Isolationsfolie 22 ausgebildet. Der Zellverbinder 10 wirkt in der vorliegenden Ausführungsform als Modulverbinder, d.h. der Zellverbinder 10 ist geeignet, das Zellterminal der ersten Speicherzelle eines ersten Moduls des Energiespeichers und das Zellterminal der zweiten Speicherzelle eines zweiten Moduls des Energiespeichers zu verbinden. Die im Bereich des Verbindungsteils 16 angeordnete Isolationsfolie 22 dient der elektrischen Isolation des Zellverbinders von umgebenden Bauteilen. Die Isolationsfolie 22 ist um den Zellverbinder 10 in Querrichtung QR gewickelt. Die metallische Folie 20 ist gemäß der vorliegenden Ausführungsform ebenfalls in Querrichtung QR des Zellverbinders 10 gewickelt. Alternativ kann die metallische Folie 20 des Zellverbinders 10 jedoch ebenfalls in Längsrichtung LR des Zellverbinders 10 gewickelt sein.

Die Isolationsfolie 22 wird vorzugsweise bei quergewickelten Verbindern vor dem Wickeln der Isolationsfolie 22 an das Ende der metallischen Folie 20 durch z.B. Kleben oder Schweißen fixiert und kann anschließend in einem Prozess aufgewickelt werden. Alternativ kann die Isolationsfolie 22 auch ohne Fixierung in die äußerste Lage der metallischen Folie 20 miteingewickelt werden. Bei nicht quergewickelten Verbindern, z.B. längsgewickelten oder gefalteten Zellverbindern, ist das Einwickeln der Isolationsfolie 22 ebenfalls möglich, jedoch entsteht hier ein zusätzlicher Arbeitsschritt des Quer-Wickelns. Die Wicklung der Isolationsfolie 22 um die metallische Folie 20 des Zellverbinders 10 erfolgt vorzugsweise vor Einprägen der wellenförmigen Biegung in den Zellverbinder 10. Die Wicklung der Isolationsfolie 22 um den Zellverbinder 10 kann je nach geforderter Durchschlagsfestigkeit ein- oder mehrlagig erfolgen.

Der als Modulverbinder wirkende Zellverbinder 10 kann beispielsweise ebenfalls in Form eines Steckverbinders ausgebildet sein, bei welchem ein erster Teil an dem Zellterminal der ersten Speicherzelle eines ersten Moduls des Energiespeichers befestigbar ist und ein zweiter Teil an dem Zellterminal der zweiten Speicherzelle eines zweiten Moduls des Energiespeichers befestigbar ist, wobei der erste Teil und der zweite Teil des Steckverbinders zusammensteckbar sind. Alternativ kann der Zellverbinder 10 ebenfalls an einer anderen geeigneten Stelle in einem Elektro-, oder Hybridfahrzeug vorgesehen werden.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise kann die Formgebung der Biegung 18 im Bereich des Verbindungsteils 16 des Zellverbinders 10 ebenfalls eine andere geeignete Form aufweisen. Des Weiteren kann die Isolationsfolie 22 beispielsweise aus einem Thermoplast- oder Duraplastmaterial ausgebildet sein, um eine bestmögliche Anpassung an die Formgebung des Zellverbinders 10 sowie eine sichere Isolation des Zellverbinders 10 zu gewährleisten.

## Patentansprüche

1. Flexibler Zellverbinder zum elektrischen Verbinden von Zellen eines Energiespeichers, wobei der Zellverbinder (10) aus einer einzelnen metallischen Folie (20) ausgebildet ist, welche eine Mehrzahl von Lagen aufweist, **dadurch gekennzeichnet, dass** die einzelne metallische Folie (20) zum Ausbilden der Mehrzahl von Lagen in Längsrichtung (LR) oder in Querrichtung (QR) des Zellverbinders (10) gewickelt ist.

2. Flexibler Zellverbinder nach Anspruch 1, **dadurch gekennzeichnet, dass** der flexible Zellverbinder einen ersten, zum Anschluss an ein Zellterminal einer ersten Speicherzelle gebildeten Anschlussteil (12), einen zweiten, zum Anschluss an ein Zellterminal einer zweiten Speicherzelle gebildeten Anschlussteil (14), und einen, zwischen den Anschlussteilen (12, 14) angeordneten und die Anschlussteile elektrisch miteinander kontaktierenden Verbindungsteil (16) aufweist, wobei der Zellverbinder (10) im Bereich des Verbindungsteils (16) zumindest eine wellenförmige Biegung (18) um eine Querachse (Q) des Zellverbinders (10) aufweist.

3. Flexibler Zellverbinder nach einem der vorhergehenden Ansprüche, **dadurch gekennzeichnet, dass** der Zellverbinder (10) geeignet ist, das Zellterminal der ersten Speicherzelle eines ersten Moduls des Energiespeichers und das Zellterminal der zweiten Speicherzelle eines zweiten Moduls des Energiespeichers zu verbinden, wobei der Zellverbinder im Bereich des Verbindungsteils eine Isolationsfolie aufweist, welche den Zellverbinder von umgebenden Bauteilen elektrisch isoliert, wobei die Isolationsfolie um den Zellverbinder (10) in Querrichtung (QR) des Zellverbinders (10) gewickelt ist.

4. Flexibler Zellverbinder nach Anspruch 3, **dadurch gekennzeichnet, dass** die einzelne metallische Folie (20) in Querrichtung (QR) des Zellverbinders (10) gewickelt ist, wobei ein Endabschnitt (22a) der Isolationsfolie (22) an einem Endabschnitt (20a) der metallischen Folie (20) des Zellverbinders (10) fixiert ist.

5. Flexibler Zellverbinder nach Anspruch 4, **dadurch gekennzeichnet, dass** die Fixierung des Endabschnitts (22a) der Isolationsfolie (22) an dem Endabschnitt (20a) der metallischen Folie (20) durch eine Klebe- oder Schweißverbindung ausgebildet ist.

6. Flexibler Zellverbinder nach einem der vorhergehenden Ansprüche, **dadurch gekennzeichnet, dass** der Zellverbinder (10) im Bereich des Verbindungsteils (16) eine erste wellenförmige Biegung (18a) um die Querachse (Q) des Zellverbinders (10) und eine zweite wellenförmige Biegung (18b) um die Querachse (Q) des Zellverbinders (10) aufweist, wobei die erste und zweite wellenförmige Biegung (18a, 18b) an in Hochrichtung (H) des Zellverbinders (10) gegenüberliegenden Abschnitten des Zellverbinders (10) angeordnet sind.

7. Verfahren zum Herstellen eines flexiblen Zellverbinders zum elektrischen Verbinden von Zellen eines Energiespeichers, mit den Schritten:
Zuschneiden eines Streifens einer metallischen Folie (20) mit einer vorbestimmten Länge und Breite; und
Anordnen der metallischen Folie (20) in einer Mehrzahl von Lagen zum Ausbilden des Zellverbinders (10), **dadurch gekennzeichnet, dass** die metallische Folie (20) zum Ausbilden der Mehrzahl von Lagen in Längsrichtung (LR) oder in Querrichtung (QR) des Zellverbinders gewickelt wird.

8. Verfahren nach Anspruch 7, **dadurch gekennzeichnet, dass** der Zellverbinder (10) das Zellterminal der ersten Speicherzelle eines ersten Moduls des Energiespeichers und das Zellterminal der zweiten Speicherzelle eines zweiten Moduls des Energiespeichers verbindet, wobei der Zellverbinder im Bereich des Verbindungsteils eine Isolationsfolie aufweist, welche den Zellverbinder von umgebenden Bauteilen elektrisch isoliert, wobei die Isolationsfolie (22) um den Zellverbinder (10) in Querrichtung (QR) des Zellverbinders (10) gewickelt wird.

## Claims

1. Flexible cell connector for electrically connecting cells of an energy store, wherein the cell connector (10) is formed from an individual metal foil (20) which has a plurality of layers, **characterized in that** the individual metal foil (20) is wound in the longitudinal direction (LR) or in the transverse direction (QR) of the cell connector (10) in order to form the plurality of layers.

2. Flexible cell connector according to Claim 1, **characterized in that** the flexible cell connector has a first connection part (12) which is formed for connection to a cell terminal of a first storage cell, a second connection part (14) which is formed for connection to a cell terminal of a second storage cell, and a connecting part (16) which is arranged between the connection parts (12, 14) and electrically contact-connects the connection parts to one another, wherein the cell connector (10) has at least one wave-like bend (18) about a transverse axis (Q) of the cell connector (10) in the region of the connecting part (16).

3. Flexible cell connector according to either of the preceding claims, **characterized in that** the cell connector (10) is suitable for connecting the cell terminal of the first storage cell of a first module of the energy store and the cell terminal of the second storage cell of a second module of the energy store, wherein the cell connector has an insulating film in the region of the connecting part, the said insulating film electrically insulating the cell connector from surrounding components, wherein the insulating film is wound around the cell connector (10) in the transverse direction (QR) of the cell connector (10).

4. Flexible cell connector according to Claim 3, **characterized in that** the individual metal foil (20) is wound in the transverse direction (QR) of the cell connector (10), wherein an end section (22a) of the insulating film (22) is fixed to an end section (20a) of the metal foil (20) of the cell connector (10).

5. Flexible cell connector according to Claim 4, **characterized in that** the end section (22a) of the insulating film (22) is fixed to the end section (20a) of the metal foil (20) by an adhesive or welded connection.

6. Flexible cell connector according to one of the preceding claims, **characterized in that** the cell connector (10) has a first wave-like bend (18a) about the transverse axis (Q) of the cell connector (10) and a second wave-like bend (18b) about the transverse axis (Q) of the cell connector (10) in the region of the connecting part (16), wherein the first and second wave-like bends (18a, 18b) are arranged on sections of the cell connector (10) which are situated opposite one another in the vertical direction (H) of the cell connector (10).

7. Method for producing a flexible cell connector for electrically connecting cells of an energy store, comprising the steps of:
cutting a strip of a metal foil (20) to a predetermined length and width; and
arranging the metal foil (20) in a plurality of layers in order to form the cell connector (10), **characterized in that** the metal foil (20) is wound in the longitudinal direction (LR) or in the transverse direction (QR) of the cell connector in order to form the plurality of layers.

8. Method according to Claim 7, **characterized in that** the cell connector (10) connects the cell terminal of the first storage cell of a first module of the energy store and the cell terminal of the second storage cell of a second module of the energy store, wherein the cell connector has an insulating film in the region of the connecting part, which insulating film electrically insulates the cell connector from surrounding components, wherein the insulating film (22) is wound around the cell connector (10) in the transverse direction (QR) of the cell connector (10).

## Revendications

1. Connecteur de cellules souple destiné à connecter électriquement des cellules d'un accumulateur d'énergie, dans lequel le connecteur de cellules (10) est constitué d'une feuille métallique individuelle (20) qui comporte une pluralité de couches, **caractérisé en ce que** la feuille métallique individuelle (20) est enroulée dans la direction longitudinale (LR) ou dans la direction transversale (QR) du connecteur de cellules (10) pour la réalisation de la pluralité de couches.

2. Connecteur de cellules souple selon la revendication 1, **caractérisé en ce que** le connecteur de cellules souple comporte une première partie de raccordement (12) formée sur une borne de cellule d'une première cellule accumulatrice, une deuxième partie de raccordement (14) formée sur une borne de cellule d'une deuxième cellule accumulatrice, et une partie de connexion (16) disposée entre les parties de raccordement (12, 14) et connectant électriquement l'une à l'autre les parties de raccordement, dans lequel le connecteur de cellules (10) comporte, dans la région de la partie de connexion (16), au moins une courbure ondulée (18) autour d'un axe transversal (Q) du connecteur de cellules (10).

3. Connecteur de cellules souple selon l'une quelconque des revendications précédentes, **caractérisé en ce que** le connecteur de cellules (10) est apte à connecter la borne de cellule de la première cellule accumulatrice d'un premier module de l'accumulateur d'énergie et la borne de cellule de la deuxième cellule accumulatrice d'un deuxième module de l'accumulateur d'énergie, dans lequel le connecteur de cellules présente, dans la région de la partie de connexion, une feuille isolante qui isole électriquement le connecteur de cellules de composants avoisinants, dans lequel la feuille isolante est enroulée autour du connecteur de cellules (10) dans la direction transversale (QR) du connecteur de cellules (10).

4. Connecteur de cellules souple selon la revendication 3, **caractérisé en ce que** la feuille métallique individuelle (20) est enroulée dans la direction transversale (QR) du connecteur de cellules (10), dans lequel une section d'extrémité (22a) de la feuille isolante (22) est fixée à une section d'extrémité (20a) de la feuille métallique (20) du connecteur de cellules (10).

5. Connecteur de cellules souple selon la revendication 4, **caractérisé en ce que** la fixation de la section d'extrémité (22a) de la feuille isolante (22) à la section d'extrémité (20a) de la feuille métallique (20) est réalisée par liaison par adhésif ou par soudage.

6. Connecteur de cellules souple selon l'une quelconque des revendications précédentes, **caractérisé en ce que** le connecteur de cellules (10), dans la région de la partie de connexion (16), comporte une première courbure ondulée (18a) autour de l'axe transversal (Q) du connecteur de cellules (10) et une deuxième courbure ondulée (18b) autour de l'axe transversal (Q) du connecteur de cellules (10), dans lequel les première et deuxième courbures ondulées (18a, 18b) sont disposées sur des sections du connecteur de cellules (10) qui sont opposées l'une à l'autre dans la direction de la hauteur (H) du connecteur de cellules (10).

7. Procédé de fabrication d'un connecteur de cellules souple destiné à connecter électriquement des cellules d'un accumulateur d'énergie, comportant les étapes consistant à :
découper une bande d'une feuille métallique (20) ayant une longueur et une largeur prédéterminées ; et
disposer la feuille métallique (20) en une pluralité de couches pour réaliser le connecteur de cellules (10), **caractérisé en ce que** la feuille métallique (20) est enroulée dans la direction longitudinale (LR) ou dans la direction transversale (QR) du connecteur de cellules pour réaliser la pluralité de couches.

8. Procédé selon la revendication 7, **caractérisé en ce que** le connecteur de cellules (10) connecte la borne de cellule de la première cellule accumulatrice d'un premier module de l'accumulateur d'énergie et la borne de cellule de la deuxième cellule accumulatrice d'un deuxième module de l'accumulateur d'énergie, dans lequel le connecteur de cellules, dans la région de la partie de connexion, présente une feuille isolante qui isole électriquement le connecteur de cellules de composants avoisinants, dans lequel la feuille isolante (22) est enroulée autour du connecteur de cellules (10) dans la direction transversale (QR) du connecteur de cellules (10).
